# EUROPEAN PATENT SPECIFICATION

(11) **EP 4 272 989 B1**
(45) Date of publication and mention of the grant of the patent: **24.12.2025**
(21) Application number: 22171250.8
(22) Date of filing: 03.05.2022
(51) Int. Cl.: B60L 3/00, B60R 25/04, B60R 25/24, G07C 9/00

(54) **METHOD AND CONTROL SYSTEM FOR CONTROLLING AN ELECTRIC DRIVE OF AN ELECTRIC VEHICLE**
VERFAHREN UND SYSTEM ZUM STEUERN EINES ELEKTRISCHEN ANTRIEBS EINES ELEKTROFAHRZEUGS
PROCÉDÉ ET SYSTÈME DE COMMANDE POUR COMMANDER UN ENTRAÎNEMENT ÉLECTRIQUE D'UN VÉHICULE ÉLECTRIQUE

(43) Date of publication of application: 08.11.2023
(73) Proprietor: Robert Bosch GmbH, 70442 Stuttgart (DE)
(72) Inventor: Gupta, Harshit, 302018 Rajasthan (IN)

(56) References cited:
- EP-A1- 3 492 356
- CN-B- 106 515 661
- US-A1- 2013 063 244
- US-A1- 2013 116 892
- US-B2- 9 984 522

## Description

### Technical Field

The invention relates to a computer-implemented method for controlling an electric drive of an electric vehicle. The invention further relates to a control system, a computer program and a computer-readable medium for carrying out this method.

### Background Art

An electric vehicle, such as an electric car, electric motorbike or electric scooter, may have a control unit configured to limit a maximum speed and/or torque of the electric vehicle depending on its vehicle category, e.g. an EC vehicle class, such as L1e or L2e. Such limitations may be implemented as software functions and may be circumvented, for example, by replacing the control unit with a modified control unit, allowing driving at higher speeds, which may be illegal in some countries.

CN 106 515 661 B discloses control system for controlling an electric drive of an electric vehicle, the control system comprising: a first module including a first memory in which a first parameter is stored, wherein the first parameter indicates a vehicle category associated with the electric vehicle; a second module including a second memory in which a second parameter is stored; and wherein the first module further includes a first processor and the second module further includes a second processor; wherein the first module and the second module are connected to each other for data communication.

US 2013/116892 A discloses: control system for controlling an electric drive of an electric vehicle, the control system comprising: a first module including a first memory in which a first parameter is stored; a second module including a second memory in which a second parameter is stored; and wherein the first module further includes a first processor and the second module further includes a second processor; wherein the first module and the second module are connected to each other for data communication; wherein at least one of the first processor and the second processor is configured to carry out a method, comprising: reading a first parameter stored in a first memory of a first module of the control system and a second parameter stored in a second memory of a second module of the control system; comparing the first parameter and the second parameter; when the first parameter and the second parameter are identical: generating an activation command for activating the electric drive.

US 9 984 522 B2 discloses control system for controlling an electric drive of an electric vehicle, the control system comprising: a first module including a first memory in which a first parameter is stored, wherein the first parameter indicates a vehicle category associated with the electric vehicle; a second module including a second memory in which a second parameter is stored, wherein the second parameter indicates a vehicle category associated with the electric vehicle; and wherein the first module and the second module are adapted to be mounted separately to the electric vehicle; and wherein the first module further includes a first processor and the second module further includes a second processor; wherein the first module and the second module are connected to each other for data communication.

### Disclosure of Invention

In view of this, a computer-implemented method for controlling an electric drive of an electric vehicle, a corresponding control system, a corresponding computer program and a corresponding computer-readable medium according to the independent claims are presented below. Advantageous further developments and improvements of the approach presented herein result from the description and are described in the dependent claims.

### Advantages of the Invention

Embodiments of the present invention prevent a user from modifying a control system for controlling an electric drive of an electric vehicle by simply replacing one or more of the hardware components of the control system, for example in order to convert the vehicle to a more powerful vehicle category ("tuning") without authorization from the OEM or a service center.

A first aspect of the invention relates to a computer-implemented method for controlling an electric drive of an electric vehicle, the electric vehicle comprising a control system for controlling the electric drive. The method at least comprises: reading a first parameter stored in a first memory of a first module of the control system and a second parameter stored in a second memory of a second module of the control system, wherein each of the first parameter and the second parameter indicates a vehicle category associated with the electric vehicle; comparing the first parameter and the second parameter; when the first parameter and the second parameter are identical: generating an activation command for activating the electric drive.

The activation command may not be generated when the first parameter and the second parameter are not identical.

In other words, modifying the control system by simply replacing one of the two modules in order to convert the vehicle to another vehicle category and then activating the electric drive with the modified control system is not possible if there is a mismatch between the vehicle categories as indicated by the parameters stored in the two memories. This makes it more difficult for a user to modify the control system without the help and/or authorization of the manufacturer of the control system and/or a competent service center. Thus, unwanted or even illegal modifications, in particular tuning, of the control system can be avoided.

The method is carried out automatically by at least one processor of the control system.

The electric vehicle may be, for example, a motorcycle, a scooter, a bicycle, a car, a truck, a bus or an autonomously moving robot.

The two parameters may each indicate a specified vehicle category, such as "motorbike", "scooter" or "bicycle". In particular, the two parameters may each indicate a legal vehicle class, such as "L1e", "L2e" or "L3e", which may differ from each other in a maximum permissible speed or other technical aspects.

A second aspect of the invention relates to a control system for controlling an electric drive of an electric vehicle. The control system at least comprises: a first module including a first memory in which a first parameter is stored, wherein the first parameter indicates a vehicle category associated with the electric vehicle; a second module including a second memory in which a second parameter is stored, wherein the second parameter indicates a vehicle category associated with the electric vehicle; and at least one processor configured to carry out the method as described above and below.

The two modules are physically separate modules and are adapted to be mounted separately to the electric vehicle.

The two modules are connected to each other for data communication; and may each be connected to a vehicle bus of the electric vehicle, e.g. a CAN bus, for data communication.

For example, the first and/or second memory may be RAM (random-access memory), ROM (read-only memory), EPROM (erasable programmable read-only memory), EEPROM (electrically erasable programmable read-only memory), flash memory or a combination of at least two of these examples.

It is possible for the two memories to have different architectures, different reading and/or writing speeds and/or different interfaces for data communication with a processor and/or peripheral devices.

The control system may be configured to control the electric drive on the basis of the vehicle category as indicated by the (matching) first and second parameters in such a manner that the driving speed of the electric vehicle does not exceed a specified maximum speed (which may be specified as a function of the vehicle category).

The control system may include, for example, a vehicle control unit as the first module, which may be configured to control rotational speed, direction of rotation and/or torque of at least one electric motor of the electric drive, and an immobilizer as the second module, which may be configured to authorize a (mechanical) key used for starting the electric vehicle. The immobilizer may cause the vehicle control unit to disable the electric drive when the key is not valid.

The control system may include hardware and/or software modules. In addition to the at least one processor and the two memories, the control system may include one or more data communication interfaces for data communication with peripheral devices.

Further aspects of the invention relate to a computer program comprising instructions which, when the program is executed by at least one processor, cause the at least one processor to carry out the method as described above and below and to a computer-readable medium in which the computer program is stored. The computer program may be, for example, executed by one or more processors of the control system.

The computer-readable medium may be a volatile or non-volatile data storage device. For example, the computer-readable medium may be a hard drive, a USB (universal serial bus) storage device, RAM (random-access memory), ROM (read-only memory), EPROM (erasable programmable read-only memory), EEPROM (electrically erasable programmable read-only memory), flash memory or a combination of at least two of these examples. The computer-readable medium may also be a data communication network for downloading program code, such as the Internet or a data cloud.

It should be noted that features of the method as described above and below may also be features of the control system, the computer program and the computer-readable medium, and vice versa.

Embodiments of the invention may be considered, without limiting the invention, as being described below.

According to an embodiment, the method may further comprise: when the electric vehicle is started with a key, receiving a unique identifier associated with the key; analyzing the identifier to check whether the key is valid; preventing the activation command from being generated when the key is not valid. The unique identifier may be a specified code, e.g. by the manufacturer of the control system. It may be that a known identifier is stored in the first memory together with the first parameter and/or in the second memory together with the second parameter and that the key is recognized as valid when the received identifier matches the known identifier. Accordingly, replacing one or both of the modules may result in the key no longer being recognized as valid. Thus, starting the electric drive using the same key (as originally provided, for example, by the manufacturer of the control system) in combination with the modified control system is impossible. This significantly improves the protection of the control system against unauthorized modifications.

According to an embodiment, the activation command may cause the control system to enable switching from a neutral mode, in which the electric drive is prevented from generating torque, into a drive (or reverse) mode, in which the electric drive is enabled to generate torque. In other words, the electric drive remains in the neutral mode unless the activation command is generated (e.g. in response of starting the electric vehicle with the key). This has the advantage that the electric vehicle can be moved freely by applying external forces even if the electric drive cannot be activated.

According to an embodiment, the method may further comprise: when the electric drive has been activated, receiving a driver request indicative of a desired driving speed of the electric vehicle; generating a control command for controlling at least one electric motor of the electric drive from the driver request. It may be that driver requests from the driver of the electric vehicle are ignored as long as the electric drive has not been activated.

According to the invention, the first module and the second module are adapted to be mounted separately to the electric vehicle. In other words, the two modules may be adapted to be replaced independently of each other. This may improve the reparability of the control system.

For example, the first module may include a first housing which accommodates the first memory and, additionally, a first processor (see below), whereas the second module may include a second housing which accommodates the second memory and, additionally, a second processor (see below). The housings may protect all or at least some of the components of the respective module from environmental influences, such as moisture, dirt or mechanical shocks.

According to the invention, the first module further includes a first processor and the second module further includes a second processor. The first module and the second module are connected to each other for data communication and at least one of the first processor and the second processor is configured to carry out the method as described above and below. For example, the first processor may be connected to the first memory and, additionally, via a vehicle bus of the electric vehicle, e.g. a CAN bus, to the second memory and/or the second processor may be connected to the second memory and, additionally, via a vehicle bus of the electric vehicle, e.g. a CAN bus, to the first memory. It may be that the first memory and the first processor are implemented as a first chip, wherein the second memory and the second processor are implemented as a second chip different from the first chip. This may reduce manufacturing costs and allow for a more compact design of the module(s). However, it is also possible that the first memory and the first processor are implemented as separate chips and/or that the second memory and the second processor are implemented as separate chips.

According to an embodiment, the first processor may be configured for: when the electric drive has been activated, receiving a driver request indicative of a desired driving speed of the electric vehicle; generating a control command for controlling at least one electric motor of the electric drive from the driver request. It may be that driver requests from the driver of the electric vehicle are ignored by the first processor as long as the electric drive has not been activated.

According to an embodiment, the second processor may be configured for: when the electric vehicle is started with a key, receiving a unique identifier associated with the key; analyzing the identifier to check whether the key is valid; preventing an activation command for activating the electric drive from being generated when the key is not valid. The unique identifier may be a specified code, e.g. by the manufacturer of the control system. It may be that a known identifier is stored in the first memory together with the first parameter and/or in the second memory together with the second parameter and that the key is recognized as valid when the received identifier matches the known identifier. Accordingly, replacing one or both of the modules may result in the key no longer being recognized as valid. Thus, starting the electric drive using the same key (as originally provided, for example, by the manufacturer of the control system) in combination with the modified control system is impossible. This significantly improves the protection of the control system against unauthorized modifications.

According to an embodiment, at least one of the first memory and the second memory may be read-only memory. This helps to avoid unauthorized overwriting of one or both of the memories. The read-only memory may be, for example, ROM, EPROM, EEPROM, flash memory or a combination of at least two of these examples.

### Brief Description of Drawings

Advantageous embodiments of the invention are further explained below with reference to the accompanying drawings. Neither the drawings nor the description are to be construed as limiting the invention.
Fig. 1 shows an electric scooter with a control system according to an embodiment of the invention.
Fig. 2 shows the control system of Fig. 1 in more detail.
Fig. 3 shows a flow chart illustrating a method according to an embodiment of the invention.

The figures are merely schematic and not to scale. Identical reference signs in the figures denote identical features or features having the same effect.

### Mode(s) for Carrying Out the Invention

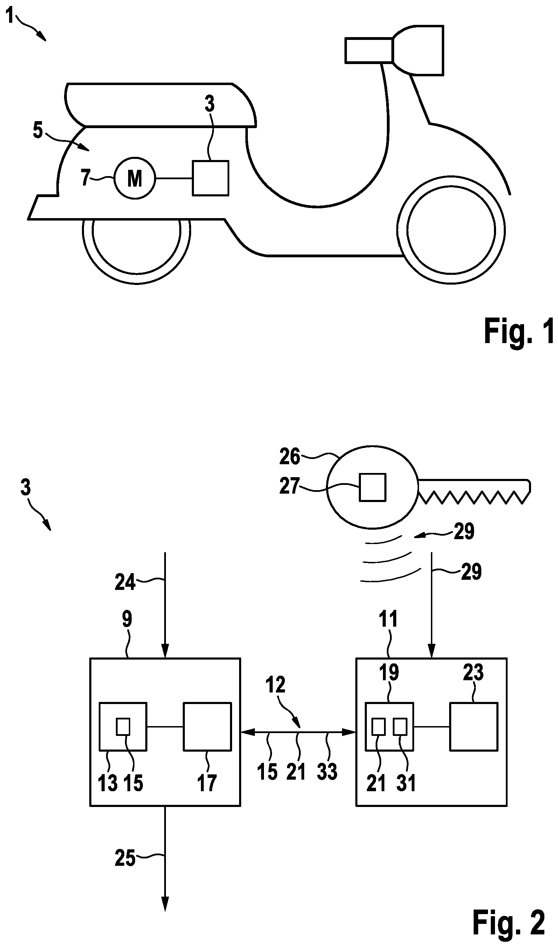

Fig. 1 shows an electric scooter 1 with a control system 3 for controlling an electric drive 5 of the scooter 1, which may include one or more electric motors 7.

Fig. 2 shows components of the control system 3, which may be implemented as hardware and/or software.

As shown here, the control system 3 comprises a first module 9 and a second module 11 which are interconnected for data communication, e.g. via a vehicle bus 12 such as a CAN bus.

The first module 9 includes a first memory 13 in which at least a first parameter 15 is stored and a first processor 17 connected to the first memory 13.

The second module 11 includes a second memory 19 in which at least a second parameter 21 is stored and a second processor 23 connected to the second memory 19.

Each of the first parameter 15 and the second parameter 21 indicates a vehicle category associated with the scooter 1, such as L1e, L2e or L3e.

Additionally, the first processor 17 may be connected via the vehicle bus 12 to the second memory 19 and/or the second processor 23 may be connected via the vehicle bus 12 to the first memory 13.

To avoid unwanted overwriting, one or both of the memories 13, 19 may be read-only memory, such as ROM, EPROM, EEPROM or flash memory.

The modules 9, 11 may be adapted to be attached independently of each other to the scooter 1. For example, each of the modules 9, 11 may have its own housing which may accommodate all or some of the components of the respective module 9, 11 in order to protect them from environmental influences, such as moisture, dirt or mechanical shocks.

It is possible that the first processor 17 is configured to receive a driver request 24 indicative of a desired driving speed of the scooter 1 and to generate a control command 25 for controlling a rotational speed, direction of rotation and/or torque of the electric motor(s) 7 accordingly. In particular, the first processor 17 may be configured to ignore all driver requests 24 as long as the electric drive 5 has not been activated by the control system 3 (see below).

The second module 11 may be an immobilizer 11 configured to authenticate a key 26 for starting the scooter 1, e.g. a mechanical key.

The key 26 may include a transponder 27 for transmitting a unique identifier 29 associated with the key 26. The second module 11 may be configured to receive the identifier 29 from the transponder 27 for further processing (see below). For example, a known identifier 31 for the key 26 may be stored in the second memory 19.

When the control system 3 is activated, e.g. by connecting it to an electrical energy source of the scooter 1, the control system 3 may activate the electric drive 5 by carrying out the following method.

The method may be carried out by one or both of the processors 17, 23 by executing instructions of a computer program which may be stored in one or both of the memories 13, 19.

In a first step, the control system 3 reads the first parameter 15 and the second parameter 21.

In a second step, the control system 3 checks whether the parameters 15, 21 are identical, that is, whether both parameters 15, 21 indicate the same vehicle category or vehicle class.

If the parameters 15, 21 are identical, e.g. if both parameters 15, 21 indicate "L1e", the control system 3 will generate in a third step an activation command 33 for activating the electric drive 5.

The activation command 33 may be provided via the vehicle bus 12.

For example, the activation command 33 may cause the control system 3 to enable switching of the electric drive 5 into a drive mode ("D") or reverse mode ("R").

In contrast, if the parameters 15, 21 do not match, e.g. if the first parameter 15 indicates "L3e" and the second parameter 21 indicates "L1e", the control system 3 will not generate the activation command 33 and the electric drive 5 will stay inactive, e.g. in a neutral mode ("N").

In addition, when the scooter 1 is started with the key 26, the immobilizer 11 may receive the identifier 29 and compare it with the known identifier 31. If the received identifier 29 matches the known identifier 31, the key 26 will be recognized as valid. In particular, the activation command 33 will only be generated if the key 26 is recognized as valid and the parameters 15, 21 are identical. The immobilizer 11 may prevent the control system 3 from generating the activation command 33 whenever the key is recognized as invalid.

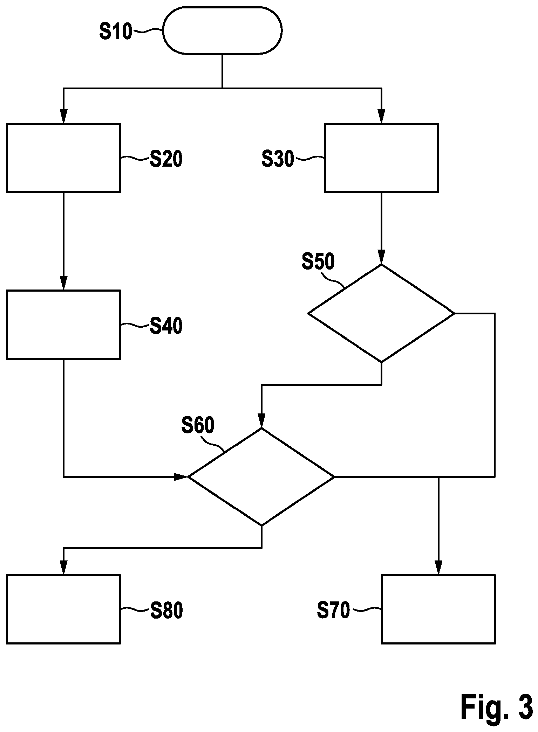

Fig. 3 shows a flow chart illustrating an exemplary start-up procedure using the control system 3.

In step S10, the power supply of the scooter 1 is switched on, which causes the control system 3 to switch on the first module 9, e.g. a vehicle control unit 9 (VCU), in step S20 and the second module 11, i.e. the immobilizer 11, in step S30. The control unit 9 may be configured to control various drive parameters of the scooter 1, e.g. by enabling drivability and controlling drive torque. On start-up, the control unit 9 may enter neutral mode, for example.

In step S40, the first module 9 sends the first parameter 15 to the vehicle bus 12.

In step S50, the immobilizer 11 analyzes the identifier 29 to authenticate the key 26.

When the authentication is successful, the immobilizer 11, in step S60, checks the vehicle category by reading the first parameter 15 and comparing it with the second parameter 21.

When the authentication is not successful, the immobilizer 11 sends a negative response to the control unit 9, causing the control unit 9 to disable the electric drive 5 in step S70.

When the authorization is successful and the vehicle categories match, the immobilizer 11 generates the activation command 33 as a positive response and sends it via the vehicle bus 12 to the control unit 9, causing the control unit 9 to enable the electric drive 5 in step S80. The control unit 9 may be configured to allow transition to drive or reverse mode from neutral mode only after the electric drive 5 has been enabled.

When the vehicle categories do not match, for example, due to replacing an original version of the control unit 9 with a modified version, the immobilizer 11 may send a failed response to the vehicle bus 12 and the control unit 9 may disable the electric drive 5 in reaction to the failed response.

Since the immobilizer 11 is paired with the key 26, it is also not possible to replace the immobilizer 11: The authorization of the key 26 would fail and, as a result, the control unit 9 would disable the electric drive 5.

Generally, the control unit 9 may be configured to disable the electric drive 5 whenever the immobilizer 11 has a status "failed" or "in progress".

In other words, the vehicle category may only be changed by the manufacturer of the control system 3 by updating the software of both the control unit 9 and the immobilizer 11.

Finally, it is noted that terms such as "comprising" or "including" do not exclude other elements or steps, and the indefinite article "a" or "an" does not exclude a plurality. Reference signs in the claims are not to be considered as limitations.

## Claims

1. A control system (3) for controlling an electric drive (5) of an electric vehicle (1), the control system (3) comprising:
a first module (9) including a first memory (13) configured to store a first parameter (15) , wherein the first parameter (15) indicates a vehicle category associated with the electric vehicle (1);
a second module (11) including a second memory (19) configured to store a second parameter (21), wherein the second parameter (21) indicates the vehicle category associated with the electric vehicle (1); and wherein the first module (9) and the second module (11) are adapted to be mounted separately to the electric vehicle (1).
and wherein the first module (9) further includes a first processor (17) and the second module (11) further includes a second processor (23);
wherein the first module (9) and the second module (11) are connected to each other for data communication;
wherein at least one of the first processor (17) and the second processor (23) is configured to carry out a method, comprising:
reading a first parameter (15) stored in a first memory (13) of a first module (9) of the control system (3) and a second parameter (21) stored in a second memory (19) of a second module (11) of the control system (3), wherein each of the first parameter (15) and the second parameter (21) indicates a vehicle category associated with the electric vehicle (1);
comparing the first parameter (15) and the second parameter (21);
when the first parameter (15) and the second parameter (21) are identical: generating an activation command (33) for activating the electric drive (5).

2. The control system of claim 1, wherein the method further comprising:
when the electric vehicle (1) is started with a key (26): receiving a unique identifier (29) associated with the key (26);
analyzing the identifier (29) to check whether the key (26) is valid;
when the key (26) is not valid: preventing the activation command (33) from being generated.

3. The control system of one of the previous claims,
wherein the method further comprising: the activation command (33) causes the control system (3) to enable switching from a neutral mode, in which the electric drive (5) is prevented from generating torque, into a drive mode, in which the electric drive (5) is enabled to generate torque.

4. The control system of one of the previous claims, wherein the method further comprising:
when the electric drive (5) has been activated: receiving a driver request (24) indicative of a desired driving speed of the electric vehicle (1);
generating a control command (25) for controlling at least one electric motor (7) of the electric drive (5) from the driver request (24).

5. The control system (3) of claim 1, wherein the first processor (17) is configured for:
when the electric drive (5) has been activated: receiving a driver request (24) indicative of
a desired driving speed of the electric vehicle (1);
generating a control command (25) for controlling at least one electric motor (7) of the electric drive (5) from the driver request (24).

6. The control system (3) of claim 1, wherein the second processor (23) is configured for:
when the electric vehicle (1) is started with a key (26): receiving a unique identifier (29) associated with the key (26);
analyzing the identifier (29) to check whether the key (26) is valid;
when the key (26) is not valid: preventing an activation command (33) for activating the electric drive (5) from being generated.

7. The control system (3) of one of claims 1, 5 or 6,
wherein at least one of the first memory (13) and the second memory (19) is read-only memory.

8. A computer program comprising instructions which, when the program is executed by at least one processor (17, 23), cause the at least one processor (17, 23) to carry out the method that is carried out by the control system of one of claims 1 to 4.

9. A computer-readable medium comprising instructions which, when executed by at least one processor (17, 23), cause the at least one processor (17, 23) to carry out the method that is carried out by the control system of one of claims 1 to 4.

## Patentansprüche

1. Steuerungssystem (3) zum Steuern eines elektrischen Antriebs (5) eines Elektrofahrzeugs (1), wobei das Steuerungssystem (3) Folgendes umfasst:
ein erstes Modul (9), das einen ersten Speicher (13) beinhaltet, der dazu ausgelegt ist, einen ersten Parameter (15) zu speichern, wobei der erste Parameter (15) eine Fahrzeugkategorie angibt, die dem Elektrofahrzeug (1) zugeordnet ist;
ein zweites Modul (11), das einen zweiten Speicher (19) beinhaltet, der dazu ausgelegt, einen zweiten Parameter (21) zu speichern, wobei der zweite Parameter (21) die Fahrzeugkategorie angibt, die dem Elektrofahrzeug (1) zugeordnet ist, und wobei das erste Modul (9) und das zweite Modul (11) dafür eingerichtet sind, separat in das Elektrofahrzeug (1) eingebaut zu sein;
und wobei das erste Modul (9) ferner einen ersten Prozessor (17) beinhaltet und das zweite Modul (11) ferner einen zweiten Prozessor (23) beinhaltet;
wobei das erste Modul (9) und das zweite Modul (11) zwecks Datenkommunikation miteinander verbunden sind;
wobei mindestens einer des ersten Prozessors (17) und des zweiten Prozessors (23) dazu ausgelegt ist, ein Verfahren auszuführen, das Folgendes umfasst:
Lesen eines ersten Parameters (15), der in einem ersten Speicher (13) eines ersten Moduls (9) des Steuerungssystems (3) gespeichert ist, und eines zweiten Parameters (21), der in einem zweiten Speicher (19) eines zweiten Moduls (11) des Steuerungssystems (3) gespeichert ist, wobei der erste Parameter (15) und der zweite Parameter (21) jeweils eine Fahrzeugkategorie angeben, die dem Elektrofahrzeug (1) zugeordnet ist;
Vergleichen des ersten Parameters (15) und des zweiten Parameters (21);
wenn der erste Parameter (15) und der zweite Parameter (21) identisch sind: Erzeugen eines Aktivierungsbefehls (33) zum Aktivieren des elektrischen Antriebs (5).

2. Steuerungssystem nach Anspruch 1, wobei das Verfahren ferner Folgendes umfasst:
wenn das Elektrofahrzeug (1) mit einem Schlüssel (26) gestartet wird: Empfangen eine eindeutigen Kennung (29), die dem Schlüssel (26) zugeordnet ist;
Analysieren der Kennung (29), um zu prüfen, ob der Schlüssel (26) zulässig ist;
wenn der Schlüssel (26) nicht zulässig ist: Verhindern des Erzeugens des Aktivierungsbefehls (33).

3. Steuerungssystem nach einem der vorhergehenden Ansprüche, wobei das Verfahren ferner Folgendes umfasst:
der Aktivierungsbefehl (33) veranlasst, dass das Steuerungssystem (3) das Schalten aus einem neutralen Modus, in dem verhindert wird, dass der elektrische Antrieb (5) ein Drehmoment erzeugt, in einen Antriebsmodus ermöglicht, in dem dem elektrischen Antrieb (5) ermöglicht wird, ein Drehmoment zu erzeugen.

4. Steuerungssystem nach einem der vorhergehenden Ansprüche, wobei das Verfahren ferner Folgendes umfasst:
wenn der elektrische Antrieb (5) aktiviert wurde: Empfangen einer Fahreranforderung (24), die eine gewünschte Fahrgeschwindigkeit des Elektrofahrzeugs (1) angibt;
Erzeugen eines Steuerbefehls (25) zum Steuern mindestens eines Elektromotors (7) des elektrischen Antriebs (5) aus der Fahreranforderung (24).

5. Steuerungssystem (3) nach Anspruch 1, wobei der erste Prozessor (17) zu Folgendem ausgelegt ist:
wenn der elektrische Antrieb (5) aktiviert wurde: Empfangen einer Fahreranforderung (24), die eine gewünschte Fahrgeschwindigkeit des Elektrofahrzeugs (1) angibt;
Erzeugen eines Steuerbefehls (25) zum Steuern mindestens eines Elektromotors (7) des elektrischen Antriebs (5) aus der Fahreranforderung (24).

6. Steuerungssystem (3) nach Anspruch 1, wobei der zweite Prozessor (23) zu Folgendem ausgelegt ist:
wenn das Elektrofahrzeug (1) mit einem Schlüssel (26) gestartet wird: Empfangen eine eindeutigen Kennung (29), die dem Schlüssel (26) zugeordnet ist;
Analysieren der Kennung (29), um zu prüfen, ob der Schlüssel (26) zulässig ist;
wenn der Schlüssel (26) nicht zulässig ist: Verhindern des Erzeugens eines Aktivierungsbefehls (33) zum Aktivieren des elektrischen Antriebs (5).

7. Steuerungssystem (3) nach einem der Ansprüche 1, 5 oder 6,
wobei mindestens einer des ersten Speichers (13) und des zweiten Speichers (19) ein Nur-Lese-Speicher ist.

8. Computerprogramm, das Anweisungen umfasst, die, wenn das Programm durch mindestens einen Prozessor (17, 23) ausgeführt wird, den mindestens einen Prozessor (17, 23) veranlassen, das Verfahren durchzuführen, das durch das Steuerungssystem nach einem der Ansprüche 1 bis 4 durchgeführt wird.

9. Computerlesbares Medium, das Anweisungen umfasst, die, wenn sie durch mindestens einen Prozessor (17, 23) ausgeführt werden, den mindestens einen Prozessor (17, 23) veranlassen, das Verfahren durchzuführen, das durch das Steuerungssystem nach einem der Ansprüche 1 bis 4 durchgeführt wird.

## Revendications

1. Système de commande (3) destiné à commander une propulsion électrique (5) d'un véhicule électrique (1), le système de commande (3) comprenant :
un premier module (9) comportant une première mémoire (13) configurée pour stocker un premier paramètre (15), le premier paramètre (15) indiquant une catégorie de véhicule associée au véhicule électrique (1) ;
un deuxième module (11) comportant une deuxième mémoire (19) configurée pour stocker un deuxième paramètre (21), le deuxième paramètre (21) indiquant la catégorie de véhicule associée au véhicule électrique (1) ; et le premier module (9) et le deuxième module (11) étant adaptés à être montés séparément sur le véhicule électrique (1),
et le premier module (9) comportant en outre un premier processeur (17) et le deuxième module (11) comportant en outre un deuxième processeur (23) ;
le premier module (9) et le deuxième module (11) étant connectés entre eux pour la communication de données ;
au moins un processeur parmi le premier processeur (17) et le deuxième processeur (23) étant configuré pour mettre en œuvre un procédé, comprenant :
la lecture d'un premier paramètre (15) stocké dans une première mémoire (13) d'un premier module (9) du système de commande (3) et d'un deuxième paramètre (21) stocké dans une deuxième mémoire (19) d'un deuxième module (11) du système de commande (3), le premier paramètre (15) et le deuxième paramètre (21) indiquant chacun une catégorie de véhicule associée au véhicule électrique (1) ;
la comparaison du premier paramètre (15) et du deuxième paramètre (21) ;
lorsque le premier paramètre (15) et le deuxième paramètre (21) sont identiques : la génération d'un ordre d'activation (33) destiné à activer la propulsion électrique (5).

2. Système de commande selon la revendication 1, le procédé comprenant en outre :
lors du démarrage du véhicule électrique (1) à l'aide d'une clé (26) : la réception d'un identifiant unique (29) associé à la clé (26) ;
l'analyse de l'identifiant (29) pour vérifier si la clé (26) est valide ;
lorsque la clé (26) n'est pas valide : l'empêchement de la génération de l'ordre d'activation (33).

3. Système de commande selon l'une des revendications précédentes, le procédé comprenant en outre le fait que :
l'ordre d'activation (33) amène le système de commande (3) à autoriser le passage d'un mode point mort, dans lequel la propulsion électrique (5) est empêchée de générer un couple, à un mode propulsion, dans lequel la propulsion électrique (5) est autorisée à générer un couple.

4. Système de commande selon l'une des revendications précédentes, le procédé comprenant en outre :
lorsque la propulsion électrique (5) a été activée : la réception d'une requête conducteur (24) indiquant une vitesse de conduite souhaitée du véhicule électrique (1) ;
la génération d'un ordre de commande (25) destiné à commander au moins un moteur électrique (7) de la propulsion électrique (5) à partir de la requête conducteur (24).

5. Système de commande (3) selon la revendication 1, dans lequel le premier processeur (17) est configuré pour :
lorsque la propulsion électrique (5) a été activée : recevoir une requête conducteur (24) indiquant une vitesse de conduite souhaitée du véhicule électrique (1) ;
générer un ordre de commande (25) destiné à commander au moins un moteur électrique (7) de la propulsion électrique (5) à partir de la requête conducteur (24).

6. Système de commande (3) selon la revendication 1, dans lequel le deuxième processeur (23) est configuré pour :
lors du démarrage du véhicule électrique (1) à l'aide d'une clé (26) : recevoir un identifiant unique (29) associé à la clé (26) ;
analyser l'identifiant (29) pour vérifier si la clé (26) est valide ;
lorsque la clé (26) n'est pas valide : empêcher la génération d'un ordre d'activation (33) destiné à activer la propulsion électrique (5).

7. Système de commande (3) selon l'une des revendications 1, 5 ou 6,
dans lequel au moins une mémoire parmi la première mémoire (13) et la deuxième mémoire (19) est une mémoire morte.

8. Programme d'ordinateur comprenant des instructions qui, lorsque le programme est exécuté par au moins un processeur (17, 23), amènent le processeur (17, 23) à mettre en œuvre le procédé qui est mis en œuvre par le système de commande selon l'une des revendications 1 à 4.

9. Support lisible par ordinateur comprenant des instructions qui, lorsqu'elles sont exécutées par au moins un processeur (17, 23), amènent l'au moins un processeur (17, 23) à mettre en œuvre le procédé qui est mis en œuvre par le système de commande selon l'une des revendications 1 à 4.
